# EUROPÄISCHE PATENTSCHRIFT

(11) **EP 0 917 752 B1**
(45) Veröffentlichungstag und Bekanntmachung des Hinweises auf die Patenterteilung: **31.10.2001**
(21) Anmeldenummer: 97938752.9
(22) Anmeldetag: 06.08.1997
(51) Int. Cl.: H02B 11/167, H02B 11/12

(54) **LEISTUNGSSCHALTANLAGE MIT TRENNFUNKTIONEN**
POWER SWITCH INSTALLATION WITH DISCONNECTING FUNCTIONS
INSTALLATION D'INTERRUPTION D'ALIMENTATION AVEC FONCTIONS DE DISJONCTION

(30) Priorität: 09.08.1996 DE 19633524
(43) Veröffentlichungstag der Anmeldung: 26.05.1999
(73) Patentinhaber: SIEMENS AKTIENGESELLSCHAFT, 80333 München (DE)
(72) Erfinder: AUGSBURG, Lothar, D-12105 Berlin (DE); BÖTTCHER, Martin, D-10587 Berlin (DE); FREUNDT, Karsten, D-13591 Berlin (DE); KRYSIAK, Jürgen, D-14169 Berlin (DE)
(86) Internationale Anmeldenummer: DE9701696
(87) Internationale Veröffentlichungsnummer: WO9807223

(56) Entgegenhaltungen:
- EP-A- 0 086 734
- US-A- 3 716 684
- US-A- 5 459 293
- US-A- 5 481 075

## Beschreibung

Die Erfindung betrifft eine Leistungsschaltanlage mit Leistungsschalter, insbesondere luftisolierte Mittelspannungs-Schaltanlage mit in einem Trenneinschub angeordneten Vakuum-Leistungsschalter, wobei der Leistungsschalter eine Poleinheit und einen Schalterantrieb enthält und die Trennfunktion durch Verfahren des kompletten Leistungsschalters bzw. durch Drehen der Poleinheit gegenüber dem Schalterantrieb oder durch einen separaten Trennschalter erfolgt.

Eine Leistungsschalteranlage der eingangs definierten Art ist im wesentlichen durch die US-A 5,459,293 bekannt. Hier ist die Poleinheit zusammen mit dem Schalterantrieb auf einem Wagen angeordent, der zur Realisierung der Trennfunktion verschoben wird.

Darüber hinaus wurden zur Realisierung der Funktion "Lastschalten" und "Lasttrennen" bisher entweder ein Leistungsschalter mit einem in Reihe geschalteten Trennschalter eingesetzt, oder durch Drehen der Poleinheit insgesamt das Auftrennen der Laststromkreise ermöglicht. Es wird also der komplette Leistungsschalter als verfahrbare kompakte Schalteinheit konzipiert, oder zusätzlich zum Lastschalter noch ein Trennschalter benötigt, oder die Poleinheit des Leistungsschalters ist als ein vom Schalterantrieb separates Drehteil ausgeführt. Zur Realisierung derartiger Leistungsschaltanlagen ist also in allen Fällen ein entsprechender Platzbedarf vorgesehen und, insbesondere zur Steuerung des verfahrbaren Leistungsschalters, ein relativ aufwendiger Steuerungsmechanismus bereitgestellt, um diesen Leistungsschalter von außen her, beispielsweise durch entsprechende Tastenbetätigungsverlängerungen, steuern zu können.

Die der Erfindung zugrundeliegende Aufgabe besteht darin, für derartige Leistungsschaltanlagen den Platzbedarf entscheidend zu reduzieren und gleichzeitig auch die Steuerungsmechanik zur Realisierung der Steuerungsvorgänge von außerhalb erheblich zu vereinfachen, ohne jedoch die üblichen Bedienungsweisen und die in dieser Technik üblichen Sicherheitsstandards für derartige Leistungsschaltanlagen einzuschränken. Erfindungsgemäß wird dies durch die Merkmale
- 1.1: die Poleinheit des Leistungsschalters ist durch ein gegenüber dem Schalterantrieb separates Polmodul realisiert,
- 1.2: das Polmodul ist gegenüber dem Schalterantrieb verschiebbar angeordnet,
- 1.3: das Polmodul ist mit dem Schalterantrieb durch ein Kraftübertragungsmodul verbunden,
- 1.4: das Polmodul ist mit Einfahrkontakten ausgestattet, die durch das Einwirken des Kraftübertragungsmoduls axial verschiebbar und in Betriebsstellung in Eingriff mit entsprechenden Festkontakten der Leistungsschaltanlage stehen, erreicht.

Der Erfindung liegt also die Erkenntnis zugrunde, die Funktionseinheiten des Leistungsschalters - den Schalterantrieb und die Poleinheit - durch separate Funktionseinheiten auszubilden und mit dem Kraftübertragungsmodul nur das Polmodul mit den Einfahrkontakten axial in Richtung zu den Festkontakten der Leistungsschaltanlage verschiebbar anzuordnen. Mit diesen Maßnahmen ist erreicht, daß der Leistungsschalter gegenüber den bekannten Anlagenkonzepten erheblich kompakter und platzsparender aufgebaut sein kann.

Gemäß einer vorteilhaften Ausgestaltung der Erfindung ist das Merkmal
- 2.1: das Kraftübertragungsmodul ist durch einen Hebel mit Paßfeder realisiert, die in einer Welle mit Nut gleitend geführt ist, vorgesehen.

Damit ist der unmittelbare Antrieb der Poleinheit als Kraftübertragungsmodul mit einfachsten mechanischen Mitteln ausgeführt, mit der auch sehr kraftaufwendige Schaltvorgänge zum axialen Verfahren der Poleinheit ohne Schwierigkeiten durchgeführt werden können.

Eine weitere vorteilhafte Ausgestaltung der Erfindung sieht das Merkmal
- 3.1: der Schalterantrieb und das Polmodul sind integraler Bestandteil einer beiden gemeinsamen Einfahrkassette, vor.

Mit dem Vorsehen der für beide Funktionseinheiten - Schalterantrieb, Polmodul - gemeinsamen Einfahrkassette, auf der die beiden Funktionseinheiten angeordnet sind, ist der Forderung nach einer platzsparenden Aufbauweise noch zusätzlich entsprochen.

In diesem Zusammenhang ist auch die weitere vorteilhafte Ausgestaltung der Erfindung zu sehen, bei der das Merkmal
- 4.1: der Schalterantrieb ist auf der Einfahrkassette ortsfest angeordnet, vorgesehen ist.

Durch dieses Merkmal der ortsfesten Anordnung des Schalterantriebes auf der Einfahrkassette ist außerdem erreicht, daß die Steuerungsvorgänge des Leistungsschalters, die von außen her manuell eingeleitet werden, keine zusätzlichen Steuergestänge zur fernsteuerbaren Betätigung von Tasten enthalten, die üblicherweise zu den verfahrbaren Schaltaggregaten Zugriff haben.

Die Erfindung wird durch drei Figuren näher erläutert, wobei die
- Figur 1: in schematischer Darstellung die bekannten Leistungsschaltanlagen mit ihren Funktionselementen zeigt und die
- Figuren 2 und 3: ein mögliches Ausführungsbeispiel der Erfindung darstellen.

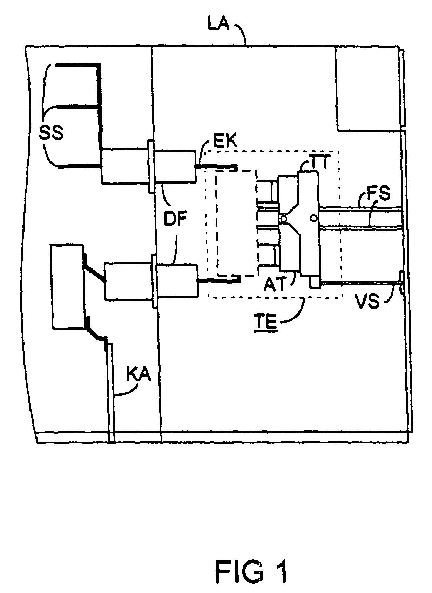

Die Figur 1 zeigt die Leistungsschaltanlage LA, bei der die Stromverbindungen zwischen den Sammelschienen SS und den Kabelabgängen, dargestellt ist lediglich ein Kabelabgang KA, über den Trenneinschub TE mittels der Einfahrkontakte EK geschlossen, bzw. aufgetrennt werden können. Der Trenneinschub TE enthält eine Antriebstraverse AT, die mit dem Trageteil TT auf den Führungschienen FS verfahrbar ist. Mit der Verriegelungsstange VS kann die Position des Trenneinschubes TE lagefixiert werden. Die Einfahrkontakte EK stehen im Betriebszustand mit nichtdargestellten Festkontakten in Verbindung, die sich innerhalb der Durchführungen DF befinden.

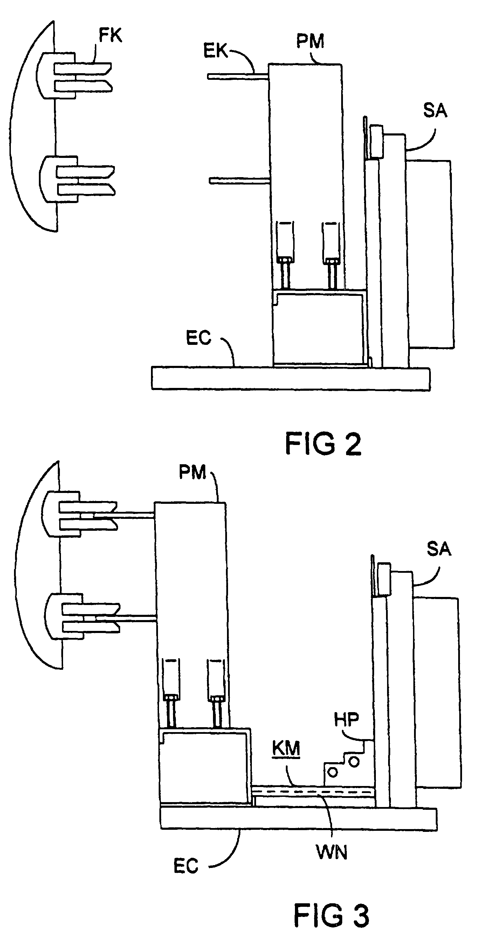

In den Figuren 2 und 3 sind lediglich die zum Verständnis der Erfindung wesentlichen Funktionselemente auszugsweise dargestellt. Aus der Figur 2 ist ersichtlich, daß die Leistungsschaltanlage die Stromkreise zwischen den Sammelschienen und den Kabelabgängen durch die nicht miteinander in Eingriff stehenden Festkontakten FK mit den Einfahrkontakten EK unterbrochen sind. Weiterhin ist ersichtlich, daß der Leistungsschalter mit der Einfahrkassette EC ausgestattet ist, auf der der Schalterantrieb SA und das Polmodul PM gemeinsam angeordnet sind.

Die Figur 3 zeigt den Leistungsschalter im Betriebszustand, bei dem das Polmodul PM durch das Kraftübertragungsmodul KM auf der Einfahrkassette EC derart axial verfahren ist, daß die Einfahrkontakte mit den Festkontakten elektrisch leitend verbunden sind. Das Kraftübertragungsmodul KM ist mit dem Hebel mit Paßfeder HP versehen, der in Verbindung mit der Welle mit Nut WN die axiale Verschiebung des Polmoduls PM auf der Einfahrkassette EC bewirkt. Durch die Verfahrbarkeit des Polmoduls PM mit dem Kraftübertragungsmodul KM des Schalterantriebes SA ist die Trennfunktion der Leistungsschaltanlage ohne Trennkontakte von zusätzlichen Trennschaltern ermöglicht.

## Patentansprüche

1. Leistungsschaltanlage mit Leistungsschalter, insbesondere luftisolierte Mittelspannungs-Schaltanlage mit in einem Trenneinschub angeordneten Vakuum-Leistungsschalter, wobei der Leistungsschalter eine Poleinheit und einen Schalterantrieb enthält und die Trennfunktion durch Verfahren des kompletten Leistungsschalters bzw. durch Drehen der Poleinheit gegenüber dem Schalterantrieb oder durch einen separaten Trennschalter erfolgt,
**gekennzeichnet durch** die Merkmale
1.1 die Poleinheit des Leistungsschalters ist **durch** ein gegenüber dem Schalterantrieb (SA) separates Polmodul (PM) realisiert,
1.2 das Polmodul(PM) ist gegenüber dem Schalterantrieb (SA) verschiebbar angeordnet,
1.3 das Polmodul (PM) ist mit dem Schalterantrieb (SA) **durch** ein Kraftübertragungsmodul (KM) verbunden,
1.4 das Polmodul (PM) ist mit Einfahrkontakten (EK) ausgestattet, die **durch** das Einwirken des Kraftübertragungsmoduls (KM) axial verschiebbar und in Betriebsstellung in Eingriff mit entsprechenden Festkontakten (FK) der Leistungsschaltanlage (LA) stehen.

2. Leistungsschaltanlage nach Anspruch 1,
**gekennzeichnet durch** das Merkmal
2.1 das Kraftübertragungsmodul (KM) ist **durch** einen Hebel mit Paßfeder (HP) realisiert, die in einer Welle mit Nut (WN) gleitend geführt ist.

3. Leistungsschaltanlage nach Anspruch 1,
**gekennzeichnet durch** das Merkmal
3.1 der Schalterantrieb (SA) und das Polmodul (PM) sind integraler Bestandteil einer beiden gemeinsamen Einfahrkassette (EC).

4. Leistungsschaltanlage nach Anspruch 3,
**gekennzeichnet durch** das Merkmal
4.1 der Schalterantrieb (SA) ist auf der Einfahrkassette (EC) ortsfest angeordnet.

## Claims

1. Circuit-breaker system having a circuit-breaker, in particular an air-insulated medium-voltage switching system with a vacuum circuit-breaker arranged in an isolating insert, the circuit-breaker containing a pole unit and a switching unit and the isolating function being performed by moving the complete circuit-breaker or by rotating the pole unit with respect to the switch drive or by a separate isolating switch,
**characterized by** the features:
1.1 the pole unit of the circuit-breaker is implemented by a pole module (PM) which is separate from the switch drive (SD),
1.2 the pole module (PM) is arranged to be displaceable with respect to the switch drive (SD),
1.3 the pole module (PM) is connected to the switch drive (SD) via a force transmission module (FM),
1.4 the pole module (PM) is equipped with isolating contacts (IC) which are axially displaceable by the action of the force transmission module (FM) and, in the operating position, engage with corresponding fixed contacts (FC) of the circuit-breaker system (CS).

2. Circuit-breaker system according to Claim 1,
**characterized by** the feature
2.1 the force transmission module (FM) is implemented by a lever with a key (LK) which is guided in a sliding manner in a shaft with a groove (GS).

3. Circuit-breaker system according to Claim 1,
**characterized by** the feature
3.1 the switch drive (SD) and the pole module (PM) are an integral part of an isolating cartridge (EC) which is common to both.

4. Circuit-breaker system according to Claim 3,
**characterized by** the feature
4.1 the switch drive (SD) is arranged in a stationary manner on the isolating cartridge (EC).

## Revendications

1. Installation de distribution à disjoncteur, notamment installation de distribution en moyenne tension à isolation par de l'air, comprenant un disjoncteur sous vide disposé dans un tiroir de séparation, le disjoncteur comportant une unité polaire et un dispositif d'entraînement du disjoncteur et la fonction de séparation étant effectuée par déplacement du disjoncteur complet ou par rotation de l'unité polaire vis-à-vis du dispositif d'entraînement du disjoncteur ou par un interrupteur de coupure distinct,
**caractérisée par** les caractéristiques
1.1 l'unité polaire du disjoncteur est réalisée par un module (PM) polaire distinct du dispositif (SA) d'entraînement du disjoncteur,
1.2 le module (PM) polaire est monté coulissant par rapport au dispositif (SA) d'entraînement du disjoncteur,
1.3 le module (PM) polaire est relié au dispositif (SA) d'entraînement du disjoncteur par un module (KM) de transmission de force,
1.4 le module (PM) polaire est muni de contacts (EK) d'entrée, qui peuvent coulisser axialement sous l'action du module (PM) de transmission de force et sont en la position de fonctionnement en prise avec des contacts (FK) fixes correspondants de l'installation (LA) de distribution.

2. Installation de distribution suivant la revendication 1,
**caractérisée par** les caractéristique
2.1 le module (KM) de transmission de force est réalisé par un levier à ressort d'ajustage, qui est guidé à glissement dans un arbre à gorge (WN).

3. Installation de distribution suivant la revendication 1,
**caractérisée par** la caractéristique
3.1 le dispositif (SA) d'entraînement du disjoncteur et le module (PM) polaire sont des constituants d'une seule pièce d'une cassette (EC) d'insertion qui est commune aux deux.

4. Installation de distribution suivant la revendication 3,
**caractérisée par** la caractéristique
4.1 le dispositif (SA) d'entraînement du disjoncteur est monté à poste fixe sur la cassette (EC) d'insertion.
